# EUROPÄISCHE PATENTSCHRIFT

(11) **EP 0 542 062 B1**
(45) Veröffentlichungstag und Bekanntmachung des Hinweises auf die Patenterteilung: **10.01.1996**
(21) Anmeldenummer: 92118647.4
(22) Anmeldetag: 30.10.1992
(51) Int. Cl.: A61C 13/20, A61C 13/18

(54) **Verfahren und Vorrichtung zum Formpressen von Dentalkeramik**
Process and apparatus for dental ceramic pressure forming
Méthode et dispositif pour le moulage sous pression de céramique dentaire

(30) Priorität: 13.11.1991 DE 4137334
(43) Veröffentlichungstag der Anmeldung: 19.05.1993
(73) Patentinhaber: Schmidseder, Alfons, D-84544 Aschau (DE)
(72) Erfinder: Schmidseder, Alfons, D-84544 Aschau (DE)
(74) Vertreter: Herrmann-Trentepohl, Werner, Dipl.-Ing.

(56) Entgegenhaltungen:
- DE-A- 3 531 017
- DE-B- 2 630 376
- GB-A- 210 280
- GB-A- 309 287
- US-A- 4 747 588
- US-A- 4 913 860

## Beschreibung

Die vorliegende Erfindung betrifft ein Verfahren gemäß dem Oberbegriff des Patentanspruches 1 sowie eine Kombination von einer Hebe- und Preßvorrichtung und einer Preßküvette gemäß dem Patentanspruch 3. Ein Verfahren gemäß dem Oberbegriff von Anspruch 1 ist aus der US-A-4 913 860 bekannt.

Seit über 50 Jahren ist es in der Zahntechnik bekannt, daß Zahnersatz aus keramischen Materialien hergestellt werden kann. Dafür wird zunächst mit den üblichen Verfahren ein Gipsabdruck des entsprechenden Gebißbereiches hergestellt und dann wird dieser Abdruck als Vorlage für die zu formende keramische Masse benutzt. Die Formgebung des keramischen Ersatzteils erfolgt entweder durch das schichtweise Einbringen einer geeigneten Pulver-Aufschlämmung in die Vorlage mit anschließender Wärmebehandlung oder durch ein Preßverfahren, bei dem das thermisch vorbehandelte keramische Pulver in die Gipsvorlage gepreßt wird. Dieses Preßverfahren hat sich gegenüber dem zuerst angegebenen Schichtungsverfahren als vorteilhaft erwiesen, da durch den Preßvorgang ein festeres Materialgefüge erreicht und damit der Verschleiß des keramischen Zahnersatzes wesentlich verringert wird.

Das Formpressen von Zahnersatzteilen aus Dentalkeramik erfolgt bislang mit den folgenden Verfahrensschritten. Zunächst wird das Ausgangsmaterial, ein keramisches Pulver der gewünschten Zusammensetzung, in einem Vakuumofen bei rund 900° C gebrannt, was zur Ausbildung einer plastisch deformierbaren keramischen Masse führt. Das Brennen unter Vakuumbedingungen ist erforderlich, da die keramische Masse in ihrem Innern eingeschlossene Gasreste bei Einwirkung von Luft unter Atmosphärenbedingungen nicht abgibt und eintrübt, was eine verminderte Materialqualität zur Folge hätte. In einem zweiten Schritt wird die thermisch vorbehandelte Keramikmasse in eine feuerfeste Matrize, die aus dem Gipsabdruck gewonnen wurde, gepreßt. Dieser Preßvorgang erfolgt in einem Preßofen bei rund 900°C . Die Benutzung von zwei separaten Öfen für die beiden Verfahrensschritte "Brennen" und "Pressen" ist der bis heute praktizierte Weg zur Herstellung von gepreßter Dentalkeramik. Damit wird insbesondere der Aufwand verringert, den ein Vakuumofen mit integrierter Preßvorrichtung aufgrund der dabei auftretenden Dichtungsprobleme in Zusammenhang mit von außen bewegten mechanischen Teilen erfordern würde. Andererseits wirft der Einsatz eines zusätzlichen Preßofens in der zahntechnischen Praxis eine Reihe von Nachteilen auf.

Zunächst erfordert der Einsatz von zwei Öfen einen hohen Aufwand an Platz und Energie. Außerdem enthält der Preßofen eine manuelle Spindelpresse, die vom Operator im Verlauf des Preßvorganges betätigt wird, woraus sich je nach Geschwindigkeit und Gleichförmigkeit der Spindeleinführung Nachteile für die Reproduzierbarkeit der Materialeigenschaften der Dentalkeramik ergeben. Weiterhin ist das gesamte formgebende Verfahren durch den Umsatz des Materials in den zweiten Ofen langwierig und durch eine verzögerte Zugriffsmöglichkeit auf den fertigen Zahnersatz gekennzeichnet. Da in der Praxis zahntechnische Laboratorien häufig in Zusammenarbeit mit einem praktizierenden Zahnarzt auf relativ beengtem Raum installiert werden, wirken sich die genannten Nachteile auf diese besonders stark aus.

Ein weiterer Nachteil der herkömmlichen Formgebung mit zwei Öfen besteht darin, daß die kommerziell angebotenen Öfen auf große Stückzahlen eingerichtet sind, um die genannten Nachteile in Bezug auf die Verfahrenseffektivität und den Kostenaufwand zu kompensieren. Daraus erwächst das Problem, daß der Zahntechniker mit einem Preßvorgang zahlreiche Zahnersatzteile der gleichen Zusammensetzung herstellen kann, was in der Praxis jedoch häufig ungünstig ist, da je nach dem Zweck des jeweils nachgebildeten Teiles verschiedene Materialien zum Einsatz kommen, die wiederum verschiedene parameter bei Brennen und Pressen erfordern.

Aufgabe der vorliegenden Erfindung ist es, ein Verfahren und eine Vorrichtung zum Formpressen von Dentalkeramik anzugeben, wobei die aufgeführten Nachteile herkömmlicher Methoden in bezug auf die Wirtschaftlichkeit, die Zugriffszeit und die Reproduzierbarkeit der erreichten Materialeigenschaften verringert werden.

Diese Aufgabe wird mit einem Verfahren entsprechend den kennzeichnenden Merkmalen des Hauptanspruches gelöst. Eine zur Durchführung des erfindungsgemäßen Verfahrens geeignete Kombination von einer Hebe- und Preßvorrichtung und einer Preßküvette wird durch die in Anspruch 3 enthaltenen Merkmale gekennzeichnet. Vorteilhafte Ausführungsformen dieser Kombination ergeben sich aus den Ansprüchen 4 bis 8.

In Zusammenhang mit der Preßvorrichtung wird darauf hingewiesen, daß Klemmechanismen in Art von Gripzangen allgemein bekannt sind (vergleiche US-PS 4 747 588).

Der Ablauf des erfindungsgemäßen Verfahrens und die Wirkungsweise von Ausführungsformen einer geeigneten Vorrichtung zur Durchführung des Verfahrens werden im folgenden anhand der Abbildungen beschrieben. Es zeigen:
- Fig. 1(a): die Seitenansicht einer Hebe- und Preßvorrichtung im entspannten Zustand;
- Fig. 1(b): die Seitenansicht einer Hebe- und Preßvorrichtung im Zustand der Verpressung (ohne Preßküvette);
- Fig. 2(a): die Draufsicht auf das Führungselement einer Preßküvette;
- Fig. 2(b): die Seitenansicht des Führungselementes gemäß Fig. 2(b) mit eingesetztem Unterstempel und Oberstempel;
- Fig. 2(c): die Draufsicht auf die Greifbacken der Hebe- und Preßvorrichtung für eine Preßküvette gemäß Fig. 2(b) in Blickrichtung des Pfeiles A in Fig. 1(b);
- Fig. 3(a): die Seitenansicht einer zweiten Preßküvette;
- Fig. 3(b): die Draufsicht auf die Greifbacken der Hebe-und Preßvorrichtung für eine Preßküvette gemäß Fig. 3(a) in Blickrichtung des Pfeiles A in Fig. 1(b).

Im Unterschied zu herkömmlichen Formgebungsverfahren wird das keramische Material unmittelbar nach dem Brennvorgang im Vakuumofen mit einer Hebe- und Preßvorrichtung dem Ofen entnommen und gleichzeitig gepreßt. Die Voraussetzung für diese Verfahrensweise besteht darin, daß im Falle von Dentalkeramik nur relativ kleine Materialmengen verarbeitet werden, die es erlauben, mit Hilfe von Muskelkraft einen geeigneten Hebemechanismus auszulösen, der den Preßvorgang mit einer derart hohen Geschwindigkeit bewirkt, daß in der dafür erforderlichen Zeit keine wesentliche Abkühlung des Preßlings auftritt.

Eine Preß- und Hebevorrichtung zur Durchführung des erfindungsgemäßen Verfahrens kann vorteilhafterweise unter Benutzung des in Gripzangen realisierten Klemm-Prinzips ausgeführt werden. Dazu werden an den Klemmbacken (1) einer herkömmlichen Gripzange (2) kraft- und formschlüssig Greifbacken (3,4) befestigt, die sich durch verlängerte Greifarme auszeichnen, deren Formgebung an die jeweils benutzte Preßküvette angepaßt wird.

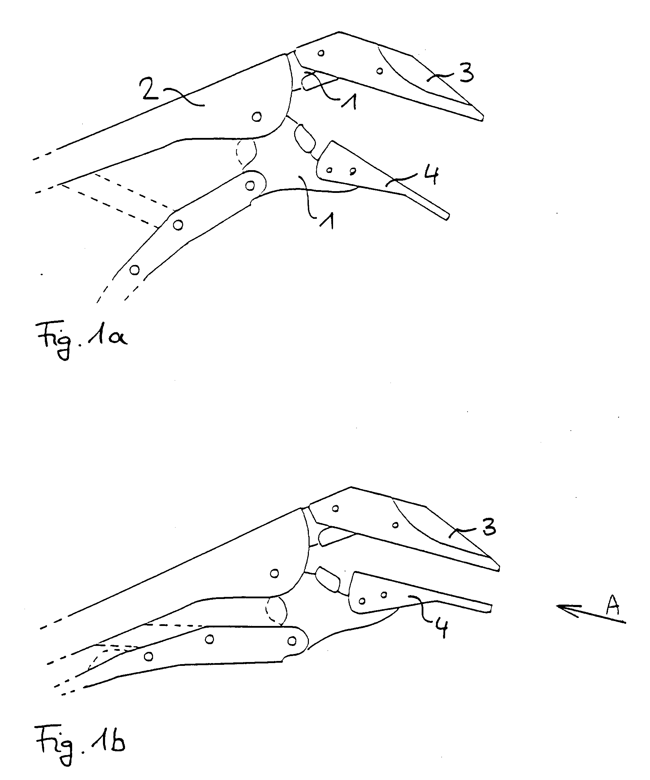

Die Greifbacken (3,4) sind derart geformt, daß sie einerseits einen guten Zugriff zur Preßküvette durch die geöffnete Tür des Vakuumbrennofens gewährleisten und andererseits die erforderliche Kraftübertragung auf die Küvette sichern. Die dadurch gekennzeichnete Hebe- und Preßvorrichtung wird im geöffneten Zustand (Figur 1a) in den Vakuumbrennofen geführt und an die Preßküvette angesetzt. Durch manuelle Betätigung erfolgt die Schließung der Hebe- und Preßvorrichtung (Figur 1b), wobei die Greifbacken (3,4) im geschlossenen Zustand an die äußere Form der Preßküvette angepaßt sein sollen, um eine möglichst homogene Kraftübertragung zu gewährleisten, und das Ausheben der Küvette aus dem Vakuumbrennofen. Das Abkühlen der Küvette erfolgt im verpreßten Zustand und erfordert bei Nutzung der üblichen Materialmengen und Küvettengrößen eine Dauer von ungefähr 20 Minuten.

Ein Vorteil der erfindungsgemäßen Vorrichtung unter Benutzung des Gripzangen-Prinzips gegenüber herkömmlichen Formpreßverfahren besteht darin, daß die auf die Preßküvette übertragene Hebelkraft lediglich durch die Einstellung des Gripzangengrundkörpers und nicht durch gegebenenfalls vorliegende Eigenarten der Arbeitsweise des Operators bestimmt wird. Damit wird eine erhöhte Reproduzierbarkeit der Materialeigenschaften der gepreßten Keramik erreicht.

Die Ausführungsform der Greifbacken der Hebe- und Preßvorrichtung wird durch die jeweils benutzte Preßküvette bestimmt.

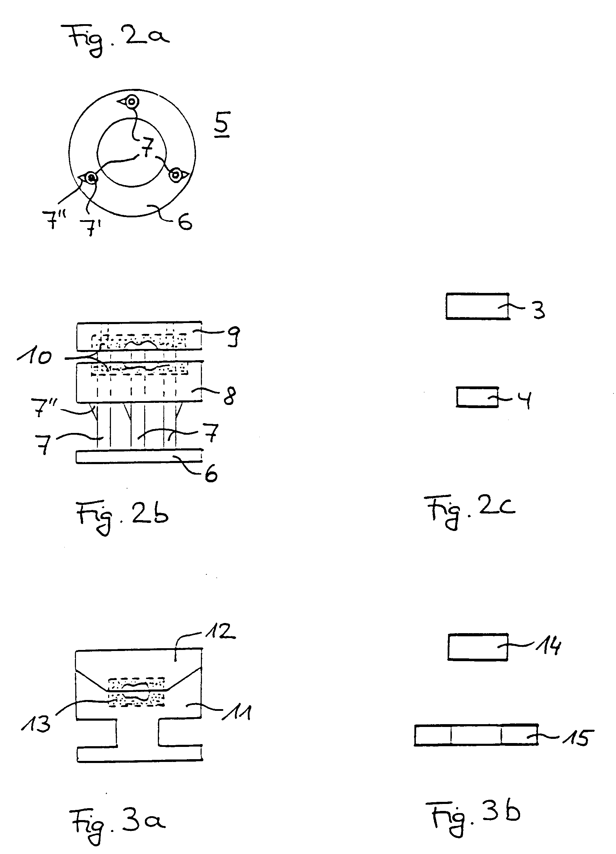

Eine erste Preßküvette (Fig. 2a,b) besteht aus einem Führungselement (5), das durch eine ringförmige Platte (6) mit drei symmetrisch angeordneten Führungssäulen (7) gebildet wird, einem unteren Stempel (8), der mit entsprechenden Öffnungen zum Einsatz in das Führungselement (5) versehen und in Richtung der Führungssäulen (7) beweglich ist, und einem oberen Stempel (9), der am oberen Ende der Führungssäulen auf diesen mit entsprechenden Öffnungen formschlüssig aufliegt. Um ein Abrutschen der Stempel entlang der Führungssäulen zu verhindern, sind die Säulen an ihren oberen Enden mit Abschnitten (7') verringerten Durchmessers zur Aufnahme des Oberstempels und mit den Vorsprüngen (7'') zur Stütze des Unterstempels versehen. Die Vorsprünge (7'') lassen sich auch durch ein offenes Ringelement ersetzen, das unterhalb des Unterstempels angeordnet diesen über den Küvettenfuß hebt und gleichzeitig den Freiraum zum Eingriff der unteren Greifbacke bildet. Das aus feuerfestem Material hergestellte Preßmuster (10) ist in dem unteren und dem oberen Stempel eingelassen. Die Form dieser Preßküvette ermöglicht, daß die obere Greifbacke (3) zur Gewährleistung einer guten Griff- und Preßsicherheit mit einer relativ großen Greiffläche und somit breit ausgeführt werden kann. Die untere Greifbacke (4) dagegen muß demgegenüber schmaler ausgeführt sein, um den Durchgriff zwischen den Führungssäulen (7) der Preßküvette zu ermöglichen (Figur 2c).

Eine zweite Preßküvette (Fig. 3a) besteht lediglich aus zwei Teilen. Der untere Stempel (11) ist mit dem Fußteil der Küvette derart verbunden, daß beide Komponenten gemeinsam den Eingriff für die untere Greifbacke (15) der Hebe- und Preßvorrichtung bilden. Der obere Stempel (12) liegt auf der Oberseite des unteren Stempels (11) aufgrund seines Eigengewichtes auf, wobei vorteilhafterweise die gegenseitige Berührungsfläche derart trichterförmig ausgeführt wird, daß der obere Stempel nicht verrutschen kann. Wiederum sind die Musterteile (13) aus feuerfestem Material in den unteren und den oberen Stempel eingelassen (Figur 3a). Entsprechend dieser Küvettenform ist es erforderlich, die Greifbacken der Hebe- und Preßvorrichtung gemäß Figur 3b auszuführen. Dabei ist es möglich, die obere Greifbacke (14) wie im ersten Ausführungsbeispiel relativ breit zu formen. Die untere Greifbacke (15) erhält dagegen eine Gabelform, die den Eingriff in den Fußteil der Preßküvette gemäß Figur 3a ermöglicht.

Die erfindungsgemäße Hebe- und Preßvorrichtung kann je nach den Gegebenheiten des zahntechnischen Laboratoriums vorteilhaft weitergebildet werden, insbesondere ist es möglich, den Winkel zwischen dem Griffteil der Hebe- und Preßvorrichtung und der Richtung der Greifbacken je nach den Erfordernissen des verwendeten Vakuumbrennofens zu verändern.

## Patentansprüche

1. Verfahren zum Formpressen von Dentalkeramik aus in einer Preßküvette befindlichem, pulverförmigem Material, welches durch einen Brennvorgang in einer Vakuumheizvorrichtung vorgerichtet ist, die nach Beendigung des Heizvorganges durch Abschaltung der Heizelemente belüftet wird, **gekennzeichnet durch** die Schritte:
Ausheben und Abkühlung der Preßküvette mit einer Hebe- und Preßvorrichtung, wobei hierbei das Material in der Preßküvette mit der Hebe- und Preßvorrichtung verpreßt wird, die einen Klemmechanismus mit zwei zusammenwirkenden und bezüglich ihrer Form an die Form der Preßküvette angepaßten Greifbacken (3, 4; 14, 15) aufweist.

2. Verfahren nach Anspruch 1, **dadurch gekennzeichnet**, daß der Vorgang des Aushebens und Verpressens manuell erfolgt.

3. Kombination von einer Hebe- und Preßvorrichtung und einer Preßküvette zur Durchführung des Formpressens von in einer Vakuumheizvorrichtung vorgerichteten Dentalkeramik aus pulverförmigem Material, insbesondere zur Durchführung des Verfahrens gemäß Anspruch 1, in einer Preßküvette, die einen Unterstempel (8, 11), einen Oberstempel (9, 12) und ein Führungselement (5) zur Halterung und gegenseitigen Führung der Stempel (8, 9; 11, 12) umfaßt, wobei Matrizen in die Stempel eingelassen sind, wobei die
Hebe- und Preßvorrichtung Griffhebel und einem Klemmechanismus wie eine Gripzange (2) mit einer oberen und einer unteren an die Form der Preßküvette angepaßten Greifbacke (3, 4; 14, 15) aufweist, wobei die Greifbacken (3, 4; 14, 15) derart geformt sind, daß sie einen sicheren und kraftschlüssigen Eingriff mit dem Unter- und Oberstempel (8, 9; 11, 12) der Preßküvette herstellen und bei manueller Betätigung der Hebe- und Preßvorrichtung eine thermische Belastung des Operators verhindern.

4. Kombination nach Anspruch 3, wobei das Führungselement (5) einen den Küvettenfuß enthaltenden Rahmen darstellt, in dem die Stempel (8, 9; 11, 12) auf Führungsschienen in Richtung der Pressung gegeneinander beweglich sind.

5. Kombination nach Anspruch 3 und 4, wobei die untere Greifbacke (4) eine geringere Backenbreite als die obere Greifbacke (3) aufweist.

6. Kombination nach Anspruch 3, wobei das Führungselement durch einen Konus an der Unterseite des Oberstempels (12) gebildet wird, der mit der trichterförmigen Oberseite des Unterstempels (11) in Eingriff steht, und daß der Unterstempel (11) den Küvettenfuß bildet, wobei Aussparungen zum Eingriff der unteren Greifbacke (15) vorgesehen sind.

7. Kombination nach Anspruch 3 und 6, wobei die untere Greifbacke (15) eine Aussparung zum Eingriff in den Unterstempel (11) der Preßküvette aufweist.

8. Kombination nach Anspruch 3 mit einer Vakuumheizvorrichtung zum Erhitzen der in der Preßküvette enthaltenen pulverförmigen Materialien, wobei der Winkel zwischen der Längsrichtung der Griffhebel (2) und der Längsrichtung der Greifbacken (3, 4; 14, 15) den geometrischen Bedingungen der Vakuumheizvorrichtung angepaßt ist.

## Claims

1. A process for dental ceramic pressure forming in a compression moulding cuvette bowl containing a powdered substance that has been prepared by means of a baking operation in vacuum heating apparatus which is ventilated after completion of the heating operation by switching off the heating elements, characterised by the steps of lifting out and cooling down the compression moulding cuvette bowl with lift and press apparatus whereby the substance in the compression moulding cuvette bowl is additionally pressure moulded by the lift and press apparatus which comprises a clamping mechanism with two simultaneously acting gripping jaws (3, 4; 14, 15) appropriately matched, in respect of their shape, to the shape of the compression moulding cuvette bowl.

2. A process according to claim 1, characterised in that the operation of lifting out and pressure moulding is effected manually.

3. A combination of lift and press apparatus and a compression moulding cuvette bowl for carrying out the compression moulding of dental ceramic consisting of a powdered substance and prepared in vacuum heating apparatus, particularly for carrying out the process in accordance with claim 1, in a compression moulding cuvette bowl comprising a lower die (8, 11), an upper die (9, 12) and a guide element (5) for the holding and reciprocal guiding of the dies (8, 9; 11, 12), wherein moulding matrices are set into the dies, wherein the lift and press apparatus comprises gripping levers and a clamping mechanism such as gripping tongs (2) with upper and lower gripping jaws (3, 4; 14, 15) appropriately matched to the shape of the compression moulding cuvette bowl, wherein the gripping jaws (3, 4; 14, 15) are shaped in such a way that they effect a secure and flexible engagement with the lower and upper dies (8, 9; 11, 12) of the compression moulding cuvette bowl and, on manual activation of the lift and press apparatus, prevent the operator's person from being affected by the heat.

4. A combination according to claim 1, wherein the guide element (5) is represented by a frame containing the base of the cuvette bowl in which the dies (8, 9; 11, 12) are movable against one another on guide rails in the direction of compression.

5. A combination according to claim 3 and 4, wherein the lower gripping jaw (4) has a lesser baking breadth than the upper gripping jaw (3).

6. A combination according to claim 3, wherein the guide element consists of a cone on the underside of the upper die (12) which engages with the funnel-shaped upper side of the lower die (11) and wherein the lower die (11) forms the base of the cuvette bowl, whereby recesses are provided for the engagement of the lower gripping jaw (15).

7. A combination according to claim 3 and 6, wherein the lower gripping jaw (15) comprises a recess for engagement with the lower die (11) of the compression moulding cuvette bowl.

8. A combination according to claim 3 together with a vacuum heating apparatus for heating up the powdered substances contained in the compression moulding cuvette bowl, wherein the angle between the longitudinal direction of the gripping levers (2) and the longitudinal direction of the gripping jaws (3, 4; 14, 15) is matched to the geometric requirements of the vacuum heating apparatus.

## Revendications

1. Méthode pour le moulage sous pression de céramique dentaire faite d'un matériau pulvérulent se trouvant dans une cuvette de moulage et qui est préparé par un processus de combustion dans un dispositif de chauffage à basse pression qui est ventilé à la fin du processus de chauffage par mise hors circuit des éléments de chauffage, caractérisée par l'étape suivante : démoulage et refroidissement de la cuvette de moulage avec un dispositif de levage et de compression, le matériau qui se trouve dans la cuvette de moulage étant comprimé avec le dispositif de levage et de compression qui présente un mécanisme de serrage avec deux mâchoires de prise concourantes (3, 4; 14, 15) et adaptées, en ce qui concerne leur forme, à la forme de la cuvette de moulage.

2. Méthode selon la revendication 1, caractérisée en ce que le processus de démoulage et de compression s'effectue manuellement.

3. Combinaison d'un dispositif de levage et de compression et d'une cuvette de moulage/ pour réaliser le moulage de céramique dentaire faite d'un matériau pulvérulent et préparée dans un dispositif de chauffage à basse pression, et en particulier pour mettre en oeuvre la méthode conforme à la revendication 1, dans une cuvette de moulage qui comprend une estampe inférieure (8, 11), une estampe supérieure (9, 12) et un élément de guidage (5) destiné à la fixation et au guidage réciproque des estampes (8,9; 11, 12), des matrices s'emboîtant dans les estampes, le dispositif de levage et de compression présentant des leviers servant de poignées et un mécanisme de serrage comme une pince-étau (2) avec une mâchoire de prise supérieure et une mâchoire de prise inférieure adaptée à la forme de la cuvette de moulage (3, 4; 14, 15), les mâchoires de prise (3, 4; 14, 15) étant moulées de façon à produire une prise sûre et entraînée par adhérence avec les estampes inférieure et supérieure (8,9; 11,12) de la cuvette de moulage et à empêcher une contrainte thermique de l'opérateur, lors d'un actionnement manuel du dispositif de levage et de compression.

4. Combinaison selon la revendication 3, l'élément de guidage (5) représentant un cadre renfermant le pied de la cuvette, cadre dans lequel les estampes (8,9; 11, 12) sont mobiles les unes par rapport aux autres sur des rails de guidage, dans le sens de la compression.

5. Combinaison selon les revendications 3 et 4, la mâchoire de prise inférieure (4) présentant une largeur inférieure à la mâchoire de prise supérieure (3).

6. Combinaison selon la revendication 3, l'élément de guidage étant constitué par un cône sur la face inférieure de l'estampe supérieure (12) qui est en prise avec la face supérieure, en entonnoir, de l'estampe inférieure (11) et l'estampe inférieure (11) constituant le pied de la cuvette, des évidements étant prévus pour la prise de la mâchoire de prise inférieure (15).

7. Combinaison selon les revendications 3 et 6, la mâchoire de prise inférieure (15) présentant un évidement pour la prise dans l'estampe inférieure (11) de la cuvette de moulage.

8. Combinaison selon la revendication 3, avec un dispositif de chauffage à basse pression pour le chauffage des matériaux pulvérulents contenus dans la cuvette de moulage, l'angle compris entre le sens longitudinal des leviers servant de poignées (2) et le sens longitudinal des mâchoires de prise (3, 4; 14, 15) étant adapté aux conditions géométriques du dispositif de chauffage à basse pression.
